Europäisches Patentamt

European Patent Office

Office européen des brevets

(11) Numéro de publication : **0 285 636 B1**

# (12) FASCICULE DE BREVET EUROPEEN

(45) Date de publication du fascicule du brevet :
**15.04.92 Bulletin 92/16**

(51) Int. Cl.$^5$ : **F16B 7/20,** E04G 7/02, A47B 57/50

(21) Numéro de dépôt : **87906670.2**

(22) Date de dépôt : **05.10.87**

(86) Numéro de dépôt international :
**PCT/FR87/00378**

(87) Numéro de publication internationale :
**WO 88/02446 07.04.88 Gazette 88/08**

(54) **DISPOSITIF DE LIAISON ENTRE DEUX PIECES, NOTAMMENT ENTRE DEUX POTEAUX DE TENTE.**

(30) Priorité : **06.10.86 FR 8613893**

(43) Date de publication de la demande :
**12.10.88 Bulletin 88/41**

(45) Mention de la délivrance du brevet :
**15.04.92 Bulletin 92/16**

(84) Etats contractants désignés :
**AT BE CH DE FR GB IT LI LU NL SE**

(56) Documents cités :
**DE-A- 1 554 434**
**DE-A- 3 245 431**
**FR-A- 1 477 591**

(73) Titulaire : **RIBAUD, Michèle**
**Domiciliée 35 Avenue Foch**
**F-75116 Paris (FR)**

(72) Inventeur : **POULAIN, Yves**
**72 avenue Paul-Vaillant-Couturier**
**F-94400 Vitry (FR)**
Inventeur : **GODARD, Claude**
**71 avenue de la Dhuys**
**F-93170 Bagnolet (FR)**

(74) Mandataire : **Hasenrader, Hubert et al**
**Cabinet BEAU DE LOMENIE 55, rue**
**d'Amsterdam**
**F-75008 Paris (FR)**

**Description**

L'invention concerne un dispositif de liaison entre deux pièces, notamment entre deux poteaux ou piètements de tente, d'échafaudage, de stand ou d'ensemble d'étagères.

Dans ces types de constructions, il est souvent nécessaire d'établir des liaisons horizontales entre des éléments de support verticaux, ces liaisons horizontales étant destinées d'une part à relier lesdits éléments entre eux et à rigidifier la structure, et d'autre part à servir elles-mêmes de support, avec d'autres liaisons semblables, à des surfaces horizontales (plafonds, planchers, étagères,...).

Pour établir ces liaisons, on a recours à différentes techniques. Le soudage présente l'inconvénient d'être définitif. Diverses sortes de colliers de serrage, de systèmes à pinces, etc., présentent l'inconvénient d'être relativement compliqués et d'imposer un temps de montage et démontage trop long.

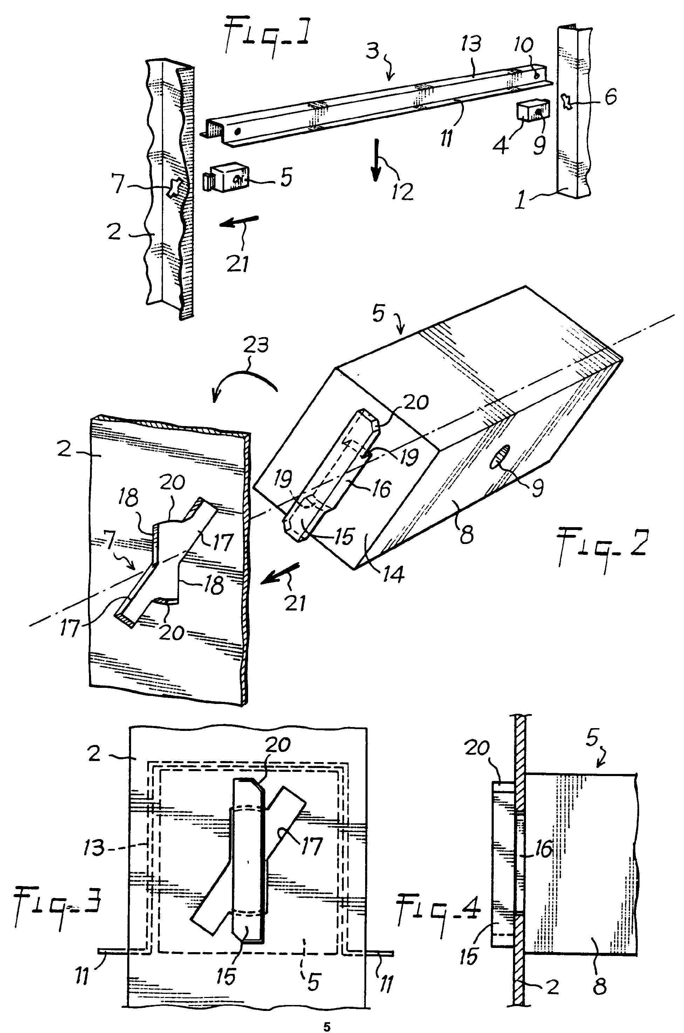

La figure 2 de DE-A-3 245 431 représente un dispositif de liaison entre deux pièces. Selon ce document, les deux organes de verrouillage sont solidaires de la barre de liaison dans laquelle ils sont usinés. Cette disposition ne permet pas d'adapter le dispositif de liaison à des pièces déjà partiellement immobiles, car il serait dans ce cas impossible d'introduire les deux organes de verrouillage dans les logements correspondants prévus dans les deux pièces.

L'invention entend remédier à cet inconvénient et propose pour ce faire les dispositions définies dans la revendication 1.

A noter que DE-A-1 554 434 décrit également un dispositif de montage d'un élément unique sur un support au moyen d'une lumière et d'appendices combinés de jonction, mais ne décrit pas un dispositif de liaison de deux pièces susceptibles de rigidifier la structure finale constituée par les deux pièces et ce dispositif de liaison.

Dans un mode de réalisation particulier, les organes de verrouillage comportent un corps prismatique à une extrémité duquel fait saillie un ensemble de verrouillage comportant une barre de verrouillage et une section de rattachement ; les pièces comportent sur des surfaces en regard au moins une lumière permettant le passage de la barre de verrouillage et son blocage après rotation ; et l'organe de blocage est un profilé coiffant et bloquant simultanément les corps prismatiques des organes de verrouillage.

Ce mode de réalisation conduit à un montage et un démontage particulièrement rapides et faciles. En disposant plusieurs liaisons horizontales semblables, à un même niveau, entre un ensemble de poteaux, on forme un ensemble pouvant supporter une surface horizontale démontable. Une application particulièrement intéressante est la réalisation de tentes ou de structures d'habitat léger démontables, où l'on peut prévoir des plafonds/planchers démontables.

D'autres caractéristiques et avantages de l'invention ressortiront de la description suivante d'un mode préféré de réalisation. Il sera fait référence aux dessins annexés sur lesquels :

. la figure 1 est une vue en perspective éclatée du dispositif de liaison utilisé entre deux piètements,

. la figure 2 est une vue en perspective montrant le détail d'un organe verrouillable et de la lumière associée, avant mise en place,

. les figures 3 et 4 montrent en vue respectivement de devant et de côté le détail d'un organe verrouillable et de la lumière associée, après verrouillage.

La figure 1 montre deux piètements 1 et 2 verticaux qu'il convient de réunir par le dispositif de liaison 3.

Le dispositif 3 comporte essentiellement deux organes 4 et 5, qui viennent se verrouiller par rotation dans des lumières 6 et 7 prévues sur les piètements 1 et 2, en face l'une de l'autre. Les sens de rotation permettant le verrouillage, et donc le déverrouillage, sont contraires pour chacun des deux organes. Aussi, il est possible par un organe de blocage unique 13 qui solidarise les organes de verrouillages 4 et 5 d'interdire tout déverrouillage.

L'organe de blocage 13 est avantageusement un profil en oméga majuscule carré, dimensionné pour venir coiffer simultanément par un mouvement de translation (flèche 12), les deux organes de verrouillage 4 et 5 dont le corps parallélépipédique 8 est ainsi bloqué dans la section en U carré du profilé.

Le corps 8 peut comporter des orifices 9 qui coopèrent avec des trous associés 10 prévus dans les ailes verticales du profil 13 pour recevoir un moyen d'immobilisation permanent ou provisoire, telle qu'une goupille, destinée à empêcher l'enlèvement accidentel du profil 13.

Les rebords horizontaux 11 du profil 13 peuvent coopérer avec les rebords semblables d'autres profils disposés au même niveau, pour permettre la pose et/ou la fixation de planchers, cloisons, etc.

Les piètements 1 et 2 sont des profilés creux ayant une surface plane en vis-à-vis dans laquelle sont percées les lumières 6 et 7.

En se reportant à la figure 2, on voit que l'organe de verrouillage 5 comporte essentiellement un corps parallélépipédique 8, dont une face frontale 14 comporte, en saillie, une barre de verrouillage 15 parallèle à la face 14 et rattachée à celle-ci par une section centrale de rattachement 16.

L'ensemble 15,16 est destiné à s'introduire dans le profilé 2 par la lumière 7. A cet effet, celle-ci comporte une ouverture principale oblique sensiblement rectangulaire 17, dont les dimensions (longueur, largeur) correspondent à un léger jeu près à celles de la barre de verrouillage 15 de manière à laisser le passage à celle-ci.

La lumière 7 comporte par ailleurs une ouverture secondaire verticale sensiblement rectangulaire 18, en intersection médiane avec l'ouverture 17, et dont les dimensions (longueur, largeur) correspondent à un léger jeu près à celles de la section centrale de rattachement 16. La longueur de l'ouverture 18 est inférieure à la longueur de la barre 15. L'épaisseur de la section centrale de rattachement 16 est sensiblement la même, à un léger jeu près, que l'épaisseur de lumière 7. Les petits bords 19 de la section de rattachement 16 sont arrondis cylindriquement, de même que les petits bords 20 de l'ouverture 18 de la lumière 7. Les petits bords de la barre de verrouillage 15 peuvent comporter un ou deux chanfreins 20.

Le fonctionnement du verrouillage est le suivant.

On approche l'organe de verrouillage 5, avec son ensemble de verrouillage 15,16, vers la lumière 7 du piètement, dans le sens de la flèche 21. On introduit la barre de verrouillage 15 dans l'ouverture principale 17 jusqu'à ce que la face 14 vienne en butée contre le piètement 2. On fait alors pivoter l'organe 5 autour de son axe central 22 (l'axe central de l'ensemble 15,16, coïncidant avec l'axe central de la lumière 7), dans le sens de la flèche 23, jusqu'à ce que les côtés de la section de rattachement 16 viennent en butée contre les côtés de l'ouverture secondaire 18. Dès lors, les extrémités de la barre de blocage 15, plus longues que l'ouverture 18, empêchent l'organe 5 de ressortir de la lumière 7 ; le seul mouvement possible est un mouvement de rotation en sens inverse de la flèche 23 pour déverrouiller l'organe 5. Mais la mise en place subséquente du profil de blocage 13 commun aux deux organes 5 et 4 dont le sens de déverrouillage est inverse empêche le mouvement et assure la sécurité de la liaison.

## Revendications

1. Ensemble formé de deux pièces à relier (1, 2) et d'un dispositif de liaison entre lesdites deux pièces (1,2), ledit dispositif de liaison comportant deux organes de verrouillage (4,5) susceptibles d'être mis en place, chacun (4,5) sur l'une des deux pièces à relier (1,2), lesdits organes de verrouillage (4,5) coopérant avec un organe de blocage (13) susceptible d'en assurer l'immobilisation mutuelle, où

a) les organes de verrouillage (4,5) sont distincts dudit organe de blocage (13),

b) une lumière (6,7) est ménagée dans chacune des deux pièces à relier (1,2) et est susceptible de retenir un ensemble de verrouillage en saillie (15,16) dont est muni l'organe de verrouillage correspondant (4,5), l'assemblage de l'organe de verrouillage (4,5) sur la pièce à relier (1,2) étant réalisé, après introduction de l'élément de verrouillage en saillie (15,16) dans ladite lumière (6,7), par une rotation déterminée de l'organe de verrouillage (4,5) par rapport à la pièce à relier (1,2), lesdites rotations des deux organes de verrouillage (4,5) étant de sens contraire par rapport à un axe commun et lesdites lumières étant en face l'une de l'autre,

c) chaque organe de verrouillage (4,5) a un corps principal (8) présentant une section non circulaire de forme complémentaire d'une section dudit organe de blocage (13) ; de sorte que la mise en place de l'organe de blocage (13) sur les corps principaux (8) desdits organes de verrouillage (4,5), par coopération des sections de formes complémentaires, interdit toute rotation de chaque organe de verrouillage (4,5) inverse de celle initiale ayant provoqué son assemblage sur les pièces à relier (1,2) et, par suite, interdit tout désassemblage de ces deux pièces (1,2).

2. Ensemble selon la revendication 1, caractérisé en ce que les organes de verrouillage (4,5) comportent un corps prismatique (8) à une extrémité duquel fait saillie un ensemble de verrouillage (15,16) comportant une barre de verrouillage (15) et une section de rattachement (16), en ce que les pièces à relier (1,2) comportent sur des surfaces en regard au moins une lumière (6,7) permettant le passage de la barre de verrouillage (15) et son blocage après rotation, et en ce que l'organe de blocage (13) est un profilé coiffant et bloquant simultanément les corps prismatiques (8) des organes de verrouillage.

3. Ensemble selon l'une quelconque des revendications 1 et 2 caractérisé en ce que l'organe de blocage (13) a une section en forme de oméga majuscule.

4. Ensemble selon l'une quelconque des revendications 1 à 3, caractérisé en ce que ledit dispositif de liaison est disposé entre des poteaux verticaux et sert à supporter une surface horizontale.

## Claims

1. Assembly consisting of two parts to be connected (1, 2) and a device for connecting the said two parts (1, 2), the said connecting device comprising two locking members (4, 5) each of which (4, 5) may be mounted on one of the two parts to be connected (1, 2), the said locking members (4, 5) cooperating with a blocking member (13) capable of ensuring the mutual fixing thereof, wherein

a) the locking members (4, 5) are separate from the said blocking member (13),

b) an opening (6, 7) is formed in each of the two parts to be connected (1, 2) and is capable of holding a projecting locking assembly (15, 16) provided on the corresponding locking member (4, 5), the locking member (4, 5) being mounted on the part to be connected (1, 2), after the projecting locking member (15, 16) has been inserted into the said opening (6, 7), by a predetermined rotational movement of the locking member (4, 5) with respect to the part to be connected (1, 2), the said rotational movements of the two locking members (4, 5) being in opposite directions with respect to a common axis and the said openings being opposite one another, and

c) each locking member (4, 5) has a main body (8) of non-circular section having a shape complementary to a section of the said blocking member (13), so that when the blocking member (13) is mounted on the main bodies (8) of the said locking members (4, 5), the cooperation of the sections having complementary shapes prevents any rotation of either locking member (4, 5) in the direction opposite to the initial direction for mounting it on the parts to be connected (1, 2) and, consequently, prevents any uncoupling of these two parts (1, 2).

2. Assembly according to claim 1, characterised in that the locking members (4, 5) comprise a prismatic body (8) at one end of which there projects a locking assembly (15, 16) comprising a lock bar (15) and a connecting portion (16), that the parts to be connected (1, 2) comprise on opposing surfaces at least one opening (6, 7) for the passage of the lock bar (15) and the blocking thereof after rotation, and that the blocking member (13) is a section simultaneously covering and blocking the prismatic bodies (8) of the locking members.

3. Assembly according to either of claims 1 and 2, characterised in that the blocking member (13) has a section in the shape of a capital omega.

4. Assembly according to any one of claims 1 to 3, characterised in that the said connecting device is disposed between vertical poles and serves to support a horizontal surface.

**Patentansprüche**

1. System, gebildet aus zwei zu verbindenden Stücken (1, 2) und einer Verbindungseinrichtung zwischen den beiden Stücken (1, 2), welche Verbindungseinrichtung zwei Verriegelungsorgane (4, 5) umfaßt, die jeweils (4, 5) an einem der beiden zu verbindenden Stücke (1, 2) angeordnet werden können, wobei die Verriegelungsorgane (4, 5) mit einem Blockierorgan (13) zusammenwirken, welches deren gegenseitige Immobilisierung sichern kann, worin

a) die Verriegelungsorgane (4, 5) vom Blockierorgan (13) getrennt sind,

b) ein Loch (6, 7) in jedem der beiden zu verbindenden Stücke (1, 2) vorgesehen ist und eine auskragende Verriegelungseinheit (15, 16), mit der das entsprechende Verriegelungsorgan (4, 5) versehen ist, halten kann, wobei die Befestigung des Verriegelungsorgans (4, 5) auf dem zu verbindenden Stück (1, 2) nach Einführung der auskragenden Verriegelungseinheit (15, 16) in das Loch (6, 7) durch eine bestimmte Verdrehung des Verriegelungsorgans (4, 5) gegenüber dem zu verbindenden Stück (1, 2) realisiert wird, und wobei die Verdrehungen der beiden Verriegelungsorgane (4, 5) in bezug auf eine gemeinsame Achse gegensinnig sind und die Löcher zueinanderschauen,

c) jedes Verriegelungsorgan (4, 5) einen Hauptkörper (8) besitzt, der einen nicht kreisförmigen Querschnitt von zu einem Querschnitt des Blockierorgans (13) komplementärer Form aufweist, sodaß die Anordnung des Blockierorgans (13) an den Hauptkörpern (8) der Verriegelungsorgane (4, 5) durch Zusammenwirken der Querschnitte komplementärer Formen jegliche Verdrehung jedes der Verriegelungsorgane (4, 5) umgekehrt zu der ersten, die Befestigung desselben an den zu verbindenden Stücken (1, 2) bewirkt habenden verhindert und infolgedessen jegliches Lösen dieser beiden Stücke (1, 2) verhindert.

2. System nach Anspruch 1, dadurch gekennzeichnet, daß die Verriegelungsorgane (4, 5) einen prismaförmigen Körper (8) umfassen, an dessen einem Ende eine Verriegelungseinheit (15, 16) mit einer Verriegelungsstange (15) und einem Befestigungsabschnitt (16) vorkragt, daß die zu verbindenden Stücke (1, 2) an gegenüberliegenden Flächen zumindest ein Loch (6, 7) aufweisen, welches den Durchtritt der Verriegelungsstange (15) und dessen Blockierung nach der Verdrehung gestattet, und daß das Blockierorgan (13) ein Profilstück ist, welches die prismaförmigen Körper (8) der Verriegelungsorgane überdeckt und gleichzeitig blockiert.

3. System nach einem der Ansprüche 1 und 2, dadurch gekennzeichnet, daß das Blockierorgan (13) einen Querschnitt in Form eines großen Omegas hat.

4. System nach einem der Ansprüche 1 bis 3, dadurch gekennzeichnet, daß die Verbindungsvorrichtung zwischen vertikalen Trägern angeordnet ist und zur Unterstützung einer horizontalen Oberfläche dient.

Fig_1

Fig_2

Fig_3

Fig_4